# EUROPEAN PATENT SPECIFICATION

(11) **EP 3 629 546 B1**
(45) Date of publication and mention of the grant of the patent: **09.06.2021**
(21) Application number: 19200273.1
(22) Date of filing: 27.09.2019
(51) Int. Cl.: H04W 12/00, H04W 12/30, H04L 29/06, H04L 29/08, H04W 4/70

(54) **SYSTEM AND METHOD FOR PROVIDING CLOUD SERVICE**
SYSTEM UND VERFAHREN ZUR BEREITSTELLUNG EINES CLOUD-SERVICE
SYSTÈME ET PROCÉDÉ DE FOURNITURE D'UN SERVICE INFONUAGIQUE

(30) Priority: 28.09.2018 US 201816146667
(43) Date of publication of application: 01.04.2020
(73) Proprietor: Yokogawa Electric Corporation, Musashino-shi Tokyo 180-8750 (JP)
(72) Inventor: Baba, Shunsuke, Tokyo, 180-8750 (JP); Sawada, Keisuke, Tokyo, 180-8750 (JP); Tsuji, Atsushi, Tokyo, 180-8750 (JP)
(74) Representative: Osha Liang

(56) References cited:
- US-A1- 2013 318 348
- US-A1- 2015 222 621
- US-A1- 2017 171 196

## Description

### BACKGROUND

### Technical Field

The present invention generally relates to a service providing system and method, such as an Internet of Things (IoT), including Industrial Internet of Things (IIoT) system and method, for providing cloud services.

### Description of Related Art

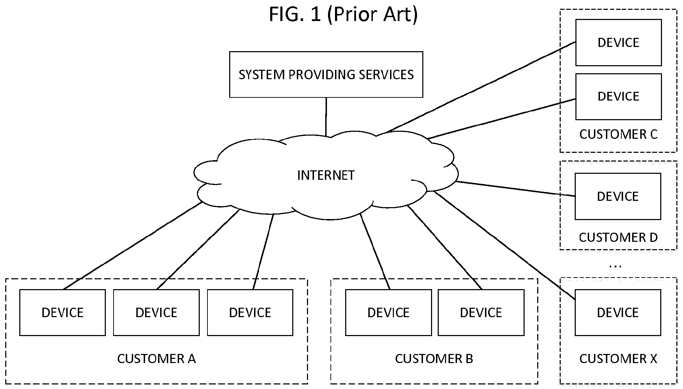

IoT systems can provide various cloud services via the Internet. FIG. 1 shows a conventional IoT system that provides such cloud services to a number of devices belonging to Customers A, B, C, ... X. For example, Customers A, B, C, ... X can remotely monitor an inside of a house using cameras and sensory devices installed in the house; receive an automatic notification of an abnormal occurrence at places such as a hospital using sensory devices attached to a patient, confirm current position of a person using smartphones and positional sensors, and monitor current positions and/or operational states of cars or heavy machineries using sensors attached thereto.

However, in such IoT systems, devices whose administrators are unknown and/or devices having security problems can cause unexpected or unintended communication. Furthermore, many illegal packets observed on the internet come from hijacked devices.

Some IoT cloud service providers provide systems that manage devices/sensors and connect the devices/sensors to IoT Hubs on cloud platforms via secure paths. For example, Microsoft Azure®, a cloud service provided by Microsoft Corporation, includes "Azure IoT Hub Device Provisioning Service." This service enables managing devices/sensors by securely connecting the devices/sensors to the cloud platforms, and easily deploying them. *See "*Provisioning devices with Azure IoT Hub Device Provisioning Service" (https://docs.microsoft.com/en-us/azure/iot-dps/about-iot-dps). Another related prior art is disclosed in US 2015/0222621 A1.

To utilize "Azure IoT Hub Device Provisioning Service", certain software must be developed using Software Development Kit (SDK) provided by Microsoft Corporation and operate in the devices/sensors. However, "lightweight devices," that is, devices having limited computing performance, limited memory, and/or limited storage, do not possess operation systems for the software created by the SDK, and cannot implement the software.

### SUMMARY

One or more embodiments provide service providing systems and methods that enable client devices to securely and easily utilize cloud services.

One or more embodiments of the invention provide a service providing system comprising a cloud platform that comprise a security database that stores a device ID, a pair of a public key and a private key corresponding to the device ID, and a communication server that communicates with the security database. The communication server communicates with a client device and first receives a request from the client device to issue a security token. This request includes device ID of the client device and data encrypted with a public key which determines whether the encrypted data is decrypted with the private key corresponding to the client device by referring to the security database. In response to the encrypted data being decrypted with the private key, the communication server issues and transmits the security token to the client device.

One or more embodiments of the invention provide a method for providing cloud service using a service providing system that comprises a security database that stores device ID, a pair of a public key and a private key corresponding to the device ID, and a communication server that communicates with the security database. The process comprises receiving by the communication server a request to issue a security token from a client device. The request includes device ID of the client device and data encrypted with a public key; determining, by the communication server, whether the encrypted data is decrypted with the private key corresponding to the client device by referring to the security database; and in response to the encrypted data being decrypted with the private key, issuing and transmitting, by the communication server, the security token to the client device.

### BRIEF DESCRIPTION OF DRAWINGS

FIG. 1 shows a schematic view of a conventional IoT system.
FIG. 2 shows a block diagram of a service providing system according to one or more embodiments of the present invention (hereinafter simply "one or more embodiments").
FIG. 3 shows a block diagram of a client device according to one or more embodiments.
FIG. 4 shows a diagram of information stored in a device security database according to one or more embodiments.
FIG. 5 shows a block diagram of a configuration server according to one or more embodiments.
FIG. 6 shows a diagram of an interface of the client device accessing the configuration server according to one or more embodiments.
FIG. 7 shows a diagram explaining the function of the configuration server according to one or more embodiments.
FIG. 8 shows a diagram of a configuration file according to one or more embodiments.
FIG. 9 shows a block diagram of a communication server according to one or more embodiments.
FIG. 10 shows a diagram explaining the function of the communication server according to one or more embodiments.
FIG. 11 shows a flowchart of configuration file request processing according to one or more embodiments.
FIG. 12 shows a flowchart of security token issue request processing according to one or more embodiments.
FIG. 13 shows a flowchart of data transmission processing according to one or more embodiments.
FIG. 14 shows a flowchart of command transmission processing according to one or more embodiments.
FIG. 15 shows a comparison table between processing executed on HTTPS communication network and processing executed on other communication networks where communication paths are not encrypted.

### DETAILED DESCRIPTION

Specific embodiments of the present invention will now be described in detail with reference to the accompanying figures. Like elements in the various figures are denoted by like reference numerals for consistency.

In the following detailed description of embodiments of the invention, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

### [Service providing system]

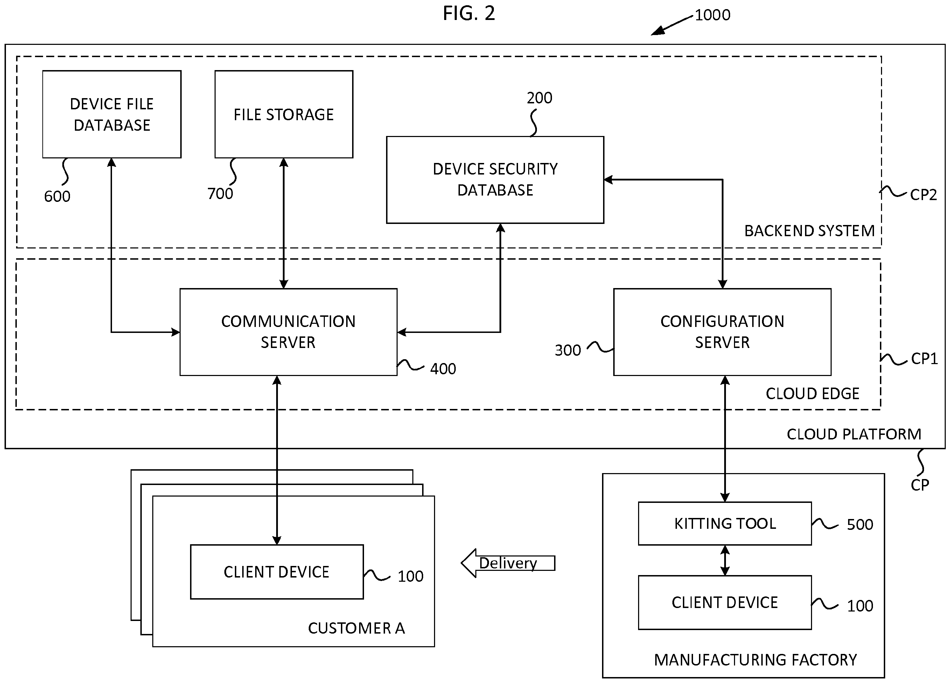

FIG. 2 shows a block diagram of a service providing system 1000 according to one or more embodiments, which includes an IoT / IIoT system. The services provided by the service providing system 1000 include enabling remote monitoring an inside of a house, receiving an automatic notification of an abnormal occurrence at places such as a hospital, confirming current position of a person, and monitoring current positions and/or operational states of cars or heavy machineries. The service providing system 1000 comprises a client device 100, device security database 200, configuration server 300, communication server 400, kitting tool 500, device file database 600, and file storage 700. The configuration server 300 and the communication server 400 are on cloud edge CP1 of a cloud platform CP, and the device security database 200, the device file database 600, and the file storage 700 are on a backend system CP2 of the cloud platform CP. Herein, the "cloud platform" is a generic term of hardware, such as a CPU, a server, and a database, constructing computer environment that provides various services via networks such as Internet.

In one or more embodiments, the kitting tool 500, the device file database 600, and the file storage 700 are arbitrary components and may be omitted. The kitting tool 500 is a program stored in a recording medium and installed in the client device 100 to automatically execute settings necessary for making the client device 100 ready to use, before shipping. The device file database 600 processes data transmitted from the client device 100 via the communication server 400 and stores the data in a time series order. The file storage 700 stores and transmits files to the client device 100 via the communication server 400 in response to requests from the client device 100.

The components of the cloud platform CP are connected to one another via a network such as Wide Area Network (WAN), Local Area Network (LAN), mobile phone networks and the Internet. The client device 100 is connected to the configuration server 300 and the communication server 400 via the Internet. According to one or more embodiments, the client device 100 communicates with the configuration server 300 and the communication server 400 via Hypertext Transfer Protocol Secure (HTTPS) communication network, i.e., executes HTTP communication on secure connections provided by Secure Sockets Layer (SSL) or Transport Layer Security (TLS) protocols.

### (Client Device)

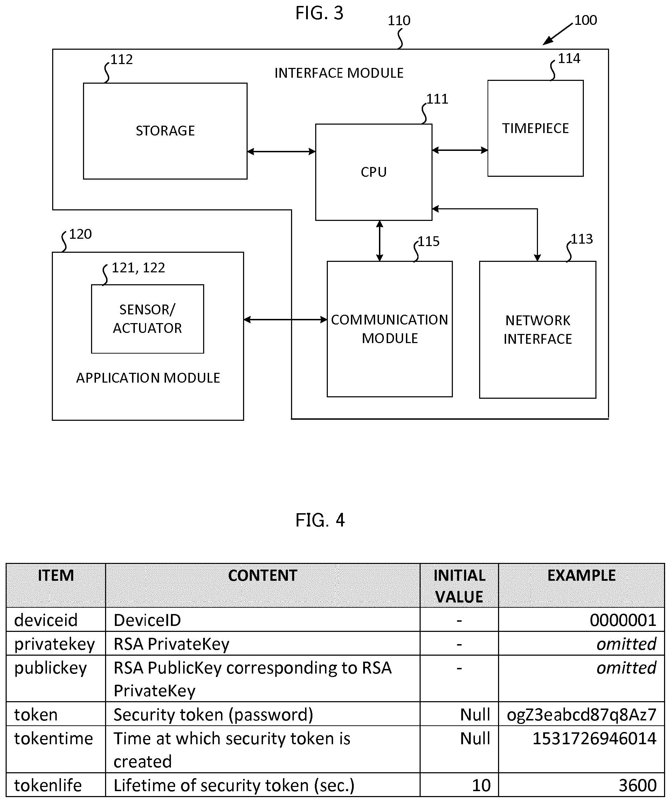

FIG. 3 shows a block diagram of the client device 100 according to one or more embodiments. The client device 100 comprises an interface module 110 and an application module 120, which are detachably connected to each other via communication connectors. The interface module 110 may be selectively connected to each of a plurality of application modules 120. The interface module 110 connects the application module 120 to a network such as Wide Area Network (WAN), Local Area Network (LAN), mobile phone networks, and the Internet.

The interface module 110 comprises a CPU 111, a storage 112, a network interface 113, a timepiece 114, and a communication module 115. The interface module 110 may further comprise at least one of an antenna for wirelessly connecting to the network, a GPS for executing positioning, a user interface for inputting/outputting data, and a power supply for supplying power to each of functional parts.

The CPU 111 according to one or more embodiments is a low power consumption CPU manufactured according to ARM architecture, which is suitable for lightweight devices.

The CPU 111 accesses the configuration server 300 to send a device ID of the client device 100 and receive a configuration file, via the network interface 113. The device ID is pre-stored in the storage 112. Alternatively, the configuration server 300 issues and returns the device ID together with the configuration file to the client device 100.

The CPU 111 also accesses the communication server 400 via the network interface 113. Before communicating with the communication server 400, the CPU 111 may confirm whether the communication server 400 is a correct (i.e., not false or unknown) server based on information obtained from the communication server 400. For example, the CPU 111 may determine whether the root certificate and the server ID coincides with the Fully Qualified Domain Name (FQDN) of the communication server 400.

Then, the CPU 111 sends HTTP requests to the communication server 400 via a socket in the network interface 113. The HTTP requests are written by the CPU111, for example, in response to input operations via the network interface 113 or the communication module 115, or user operations in the user interface.

To request the communication server 400 to issue a security token, the CPU 111 creates a HTTP request using POST method by describing the device ID in the header and binary data in the body, and sends the HTTP request to the communication server 400. According to one or more embodiments, the binary data is created by encrypting the device ID and a reference time with a public key contained in the configuration file. The reference time is the current time obtained from the timepiece 114 when the client device 100 sends the HTTP request to the communication server 400. Alternatively, the reference time may be obtained by adding or subtracting a predetermined period (e.g., five minutes) to or from the current time.

Then, the CPU 111 receives the security token and the lifetime of the security token issued by the communication server 400. When the communication server 400 does not issue the security token, the CPU 111 receives an error response, e.g., HTTP status code "500" from the communication server 400.

As the clock of the client device 100 is not always synchronized with the clock of the communication server 400 or the device security database 200, the CPU 111 calculates a time limit (second/minute/hour/day/month/year) of validity of the security token based on the reference time and the lifetime (e.g., one hour) of the security token. For example, the CPU 111 adds the lifetime to the reference time and obtains the time limit of validity of the security token. The CPU 111 then stores the security token, the lifetime, and the time limit of validity in the storage 112.

After the security token is issued, to transmit predetermined data to the communication server 400, the CPU 111 creates an HTTP request in POST method by describing the device ID and the security token in the header and describing the predetermined data in JavaScript Object Notation (JSON) format in the body, and sends the HTTP request to the communication server 400. If the communication server 400 determines that the security token is valid, the CPU 111 receives a response indicating "valid," e.g., HTTP status code "200" from the communication server 400. On the other hand, if the communication server 400 determines that the security token is invalid, the CPU 111 receives a response indicating "invalid," e.g., HTTP status code "450" from the communication server 400.

The client device 100 may determine whether the validity term of the security token has expired based on the current time of the client device 100 and the lifetime of the security token. However, the client device 100 may also transmit the data with the security token whose validity term has expired, for example, when the timepiece 114 of the client device 100 loses time. In this case, the client device 100 may retry the security token issue request after receiving HTTP status code "450" from the communication server 400.

After the security token is issued, to transmit a command to the communication server 400, the CPU 111 creates an HTTP request using POST method by describing the device ID, the security token, and a command ID in the header, and describing arbitrary payload in the body, and sends the HTTP request to the communication server 400. If the communication server 400 determines that the security token is valid, the CPU 111 receives a response indicating "valid," e.g., HTTP status code "200" from the communication server 400. On the other hand, if the communication server 400 determines that the security token is invalid, the CPU 111 receives a response indicating "invalid," e.g., HTTP status code "450" from the communication server 400.

The storage 112 is composed of at least a Random Access Memory (RAM) and a Read Only Memory (ROM). The storage 112 stores various pieces of information including device information such as provider identification information, the device ID (e.g., a serial number), a model name, and functional codes of the client device 100. The storage 112 stores various data including measurement values obtained from the application module 120 via the communication module 115. The storage 112 also stores (i) the device ID and the configuration file input from the configuration server 300, (ii) the security token and the lifetime of the security token input from the communication server 400 via the network interface 113, and (iii) the time limit of validity of the security token.

The network interface 113 is connected to the network, and transfers the data to/from other devices via the network. According to one or more embodiments, the network interface 113 causes the client device 100 to communicate with the configuration server 300 and the communication server 400 via the Internet (HTTPS communication network). The network interface 113 comprises one or more sockets in which the HTTP requests are written to execute Socket Communication.

The timepiece 114 has a clock function and outputs the current time.

The communication module 115 comprises a CPU, a memory and a converter such as an A/D converter, and is communicably connected to the application module 120 via the communication connectors to execute communication according to the function of the application module 120.

The application module 120 according to one or more embodiments is a sensor module that comprises at least one sensor 121. The sensor 121 measures physical properties and could be a temperature sensor, a humidity sensor, a flow velocity sensor, a pressure sensor, a voltage sensor, and/or a current sensor, for example.

Alternatively, the application module 120 may be an actuator module that comprises at least one actuator 122. The actuator 122 is, for example, a fan or a motor.

Alternatively, the application module 120 may be a user interface module that comprises at least one of a remote controller, a lump, or a display device.

Alternatively, the application module 120 may be a relay device that comprises at least one of an input port, an output port, or an input/output port (e.g., USB port) that can be connected to other devices. The other devices/apparatus include a capturing device, such as a camera or a video recorder, a reading device that reads barcodes and/or two-dimensional codes, e.g. QR code (registered trademark), which are put on devices/apparatus, audio equipment including microphones and speakers that collect abnormal sounds in facilities and issue alarm sounds, and a position detection device that outputs positional information of each of the devices.

The application module 120 may comprise a CPU and at least one of a storage that stores device information of the application module 120, a timepiece that has a clock function, a user interface that outputs/receives various data, and a power supply that supplies power to each of functional parts. The device information of the application module 120 includes provider identification information, a serial number, a model name, and functional codes of the application module 120.

The client device 100 may comprise a System on Chip (SoC) on which the ARM's CPU 111 and the network interface 113 having TLS support function are mounted together.

The client device 100 is not limited to the aforementioned devices, and may be a mobile device, a laptop computer, and a portable terminal as long as the client device 100 can communicate with the configuration server 300 and the communication server 400 via the Internet (HTTPS communication network) and can download the configuration file.

### (Device Security Database)

The device security database 200 according to one or more embodiments is a document database that enables high speed access to related information, such as the configuration file, using the device ID as a key. Alternatively, the device security database 200 may be a Structured Query Language (SQL) database. The related information is accessed at higher speed in the document database than the SQL database. The device security database 200 may use other data models as long as the related information is accessed at high speed.

FIG. 4 shows a diagram of information stored in the device security data base 200 according to one or more embodiments.

The device security database 200 stores the information transmitted from the configuration sever 300. Specifically, the device security database 200 stores the device ID and a pair of a private key and a public key corresponding to the device ID, which are input from the configuration server 300. According to one or more embodiments, the private key and the public key are an RSA private key and an RSA public key. The encryption algorithm is not limited to RSA encryption, and other algorithms such as the Data Encryption Standard (DES) and Advanced Encryption Standard (AES) can be used.

The device security database 200 also stores the information transmitted from the communication sever 400. For example, the device security database 200 stores the security token, a time at which the security token is created or updated, and the lifetime of the security token, which are correlated to the device ID. According to one or more embodiments, the security token is a one-time password.

The device security database 200 may have the same functional configuration as the communication server 400, to be described later. The processor of the device security database 200 may execute certain processing in cooperation with or instead of the processor 410 of the communication server 400. For example, the processor of the device security database 200 may determine whether the security token should be issued, and/or determine whether the security token is still valid. These processes are described later as the processing executed by the processor 410 of the communication server 400.

### (Configuration Server)

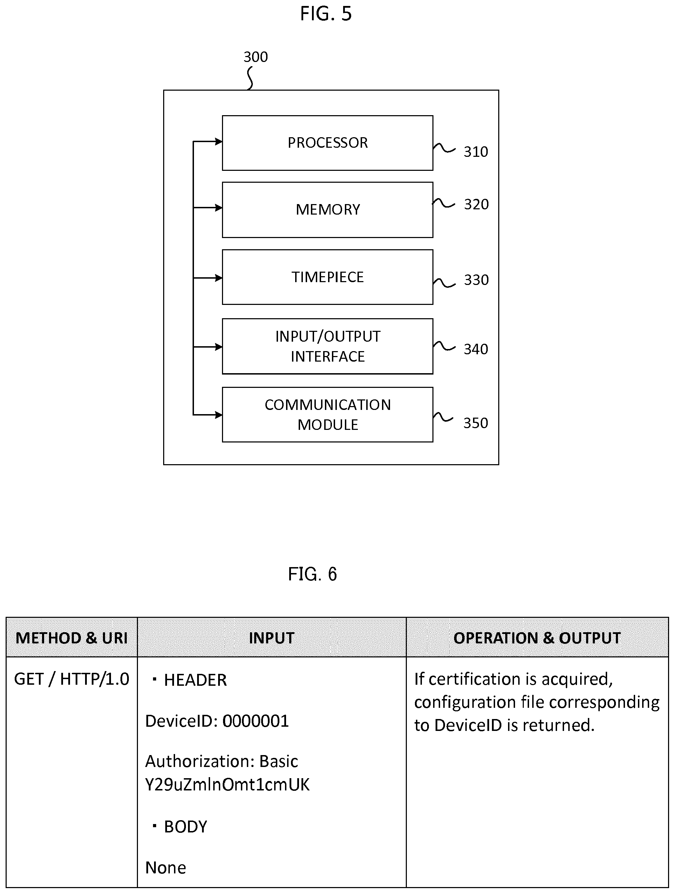

FIG. 5 shows a block diagram of the configuration server 300 according to one or more embodiments. The configuration server 300 comprises a processor 310, a memory 320, a timepiece 330, an input/output interface 340, and a communication module 350.

The configuration sever 300 may require a user of the client device 100 to input authentication information before accepting the access from the client device 100. FIG. 6 shows an example browser display of the user interface of the interface module 110 of the client device 100 when Basic authentication is executed. If the certification is acquired, the configuration sever 300 accepts the access from the client device 100.

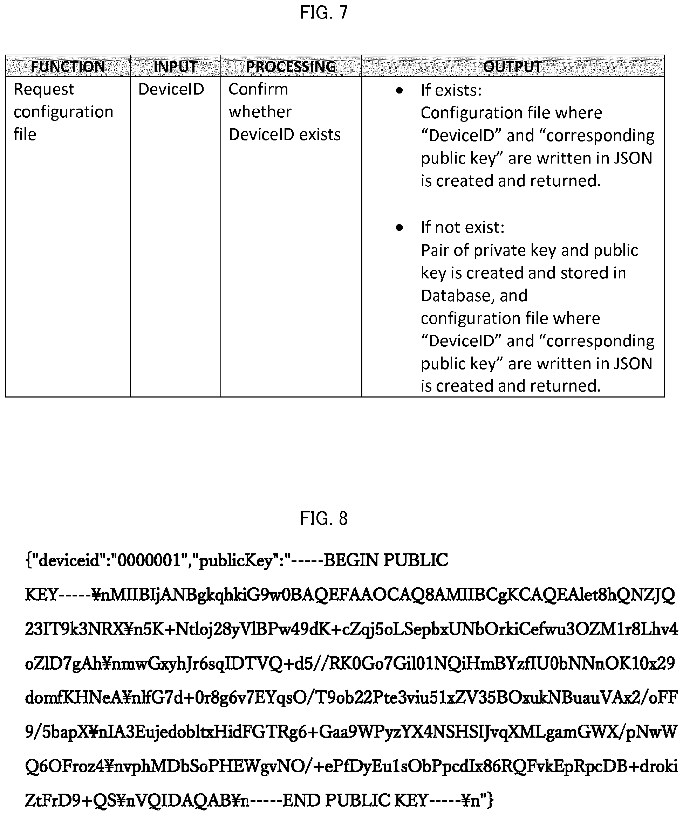

FIG. 7 shows a diagram for explaining the function of the configuration server 300 according to one or more embodiments.

When the client device accesses the configuration server 300, the processor 310 determines whether the device ID exists, i.e., whether the device ID can be specified. For example, if the kitting tool 500 specifies the device ID of the client device 100 and then causes the client device 100 to access the configuration server 300, the processor 310 determines that the device ID exists. Upon determining that the device ID does not exist, the processor 310 may create the device ID and return it to the client device together with the configuration file.

Upon determining that the device ID exists, the processor 310 retrieves, in the device security database 200, the configuration file using the device ID as the key, and determines whether the configuration file corresponding to the device ID exists in the device security database 200. Upon determining that the configuration file exists, the processor 310 reads out the configuration file from the device security database 200 and returns it to the client device 100.

Upon determining that the configuration file does not exist, the processor 310 creates the pair of the private key and the public key corresponding to the device ID, creates the configuration file based on the device ID and the public key, and stores the pair of the private and the public keys and the configuration file so as to be associated with the device ID in the device security database 200. Then the processor 310 returns the created configuration file to the client device 100.

The configuration file is installed in the client device 100 and enables the client device 100 to be identified. The configuration file is created by writing the device ID and the corresponding public key in JSON format. FIG. 8 shows a diagram of the configuration file according to one or more embodiments. The configuration file has a simple structure composed of the device ID and the public key. Thus, even the lightweight device can store the configuration file and execute processing using the configuration file.

The memory 320 stores various data, and provides a workspace that temporarily stores the data such as the data to be transferred to the device security database 200. The memory 320 also stores the server ID, the IP address, and the port numbers of sockets in the input/output interface 340.

The timepiece 330 has a clock function and outputs the current time.

The input/output interface 340 comprises an input interface such as a keyboard and a mouse, and an output interface such as a display. Alternatively, the input/output interface 340 may be a touch screen having both input and output functions.

The communication module 350 comprise a CPU and a memory, and causes the configuration server 300 to communicate with the device security database 200 via the network, and communicate with the client device 100 via the Internet (HTTPS communication network). According to one or more embodiments, the communication module 350 comprises one or more sockets for executing Socket Communication. The configuration server 300 listens and accepts the connection requests and receives the HTTP requests from the client device 100 via the sockets.

### (Communication Server)

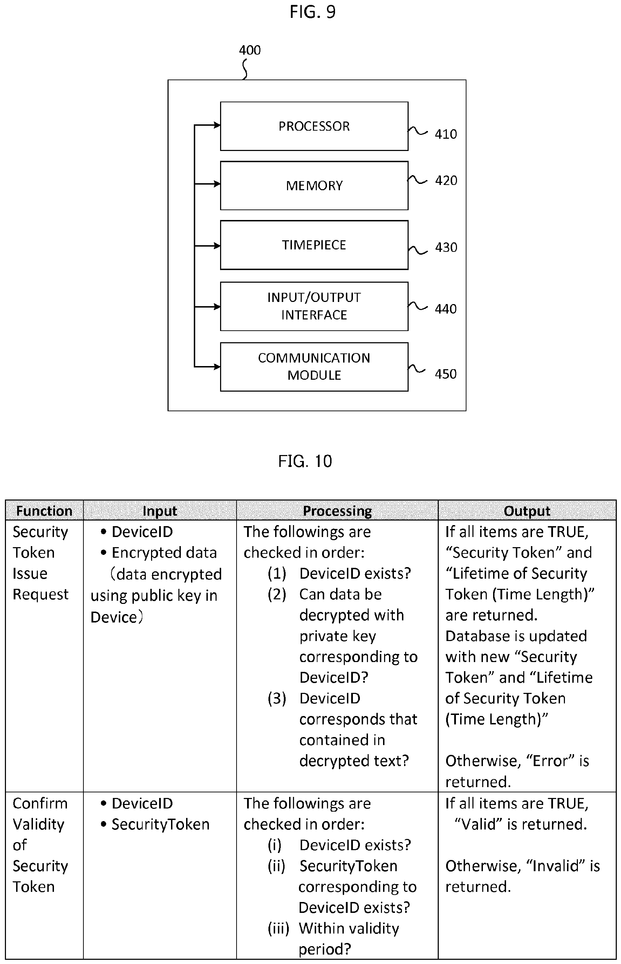

FIG. 9 shows a block diagram of the communication server 400 according to one or more embodiments. The communication server 400 comprises a processor 410, a memory 420, a timepiece 430, an input/output interface 440, and a communication module 450.

FIG. 10 shows a diagram for explaining the function of the communication server according to one or more embodiments.

The processor 410 may transmit to the client server 100 necessary information, e.g. the root certificate and the server ID, for determining whether the communication server 400 is the correct server, when the client device 100 accesses the communication server 400.

The processor 410 reads the HTTP request transmitted from the client device 100 and received in the socket by the input/output interface 440.

When receiving the security token issue request from the client device 100, the processor 410 obtains the device ID and the binary data (encrypted data) from the HTTP request, and refers to the device security database 200 to determine whether each of the following items is TRUE:
(1) Whether the device ID exists in the device security database 200
(2) Whether the binary data can be decrypted with the private key corresponding to the device ID, and
(3) Whether the decrypted text contains the device ID.

Upon determining that all the items are TRUE, the processor 410 returns the security token and the lifetime of the security token, which are obtained from the device security database 200, to the client device 100. As a result, the communication server 400 receives access only from the client devices 100 that possess the configuration file composed of the device ID and public key. The processor 410 also updates the security token, the time when the security token is issued, and the lifetime of the security token in the device security database 200. Upon determining that any of the items is not TRUE, the processor 410 returns the error response, e.g., HTTP status code "500" to the client devices 100.

Once a predetermined time has passed after the security token is issued and the processor 410 receives the data transmission request from the client device 100, the processor 410 obtains the device ID and the security token from the HTTP request, and refers to the device security database 200 to determine whether each of the following items is TRUE:
(i) Whether the device ID exists in the device security database 200
(ii) Whether the obtained security token coincides with the retrieved security token corresponding to the device ID, and
(iii) Whether an actual time has not passed the time limit of the security token.

Upon determining that all the items are TRUE, the processor 410 determines that the security token is valid, stores the predetermined data in the memory 420 and/or transfers the predetermined data to the device file database 600, and returns the response indicating "valid," e.g., HTTP status code "200" to the client device 100. Upon determining that any of the items is not TRUE, the processor 410 determines that the security token is invalid, and returns the response indicating "invalid," e.g., HTTP status code "450" to the client device 100.

When a predetermined time has passed after the security token is issued and the processor 410 receives the command transmission request from the client device 100, the processor 410 obtains the device ID and the security token from the HTTP request, and refers to the device security database 200 to determine whether each of the above items (i)-(iii) is TRUE in order.

Upon determining that all the items are TRUE, the processor 410 determines that the security token is valid, executes the processing corresponding to the command ID, and returns the response indicating "valid," e.g., HTTP status code "200" to the client device 100. Upon determining that any of the items is not TRUE, the processor 410 determines that the security token is invalid, and returns the response indicating "invalid," e.g., HTTP status code "450" to the client device 100.

The processes corresponding to the command IDs are input via the input/output interface 440 and/or previously stored in the memory 420. According to one or more embodiments, the processes corresponding to the command IDs include transferring the data obtained from the application module 120 to the device file database 600 at the backend system CP2, and downloading certain files from the file storage 700 at the backend system CP2 to transfer the downloaded files to the client device 100.

The memory 420 stores various data, and provides a workspace that temporarily stores the data such as data to be transferred to the device security database 200, the device file database 600, and/or the client device 100. The memory 420 stores the processes corresponding to the command IDs transmitted from the client device 100. The memory 420 also stores the server ID, the root certificate, the IP address, and the port numbers of sockets in the input/output interface 440.

The input/output interface 440 comprises an input interface such as a keyboard and a mouse, and an output interface such as a display. Alternatively, the input/output interface 440 may be a touch screen having both input and output functions.

The communication module 450 comprises a CPU and a memory, and causes the communication server 400 to communicate with the device security database 200, the device file database 600, and the file storage 700 via the network, and communicate with the client device 100 via the Internet (HTTPS communication network). According to one or more embodiments, the communication module 450 comprises one or more sockets for executing Socket Communication. The communication server 400 listens and accepts the connection requests and receives the HTTP requests from the client device 100 via the sockets.

### (Kitting Tool)

The kitting tool 500 is a program stored in the recording medium, such as a CD-ROM and USB, and installed in the client device 100. The kitting tool 500 causes the client device 100 to automatically execute settings necessary for making the client device 100 ready to use, before shipping, for example, in a manufacturing factory. The kitting tool 500 automatically connects the client device 100 to the configuration server 300 via the Internet (HTTPS communication network), installs applications necessary for setting up in the client device 100 from the configuration server 300, and so on. When the kitting tool 500 is omitted, a user can manually execute the settings via the user interface of the client device 100.

As the kitting tool 500 causes the client device 100 to communicate with the configuration server 300 in HTTPS, a user or an operator of the client device 100 can access the configuration server 300 while using a command line tool and/or programs written in a scrip language. Thus, the kitting tool 500 can easily cooperate with the configuration server 300.

### [Communication between Client Device and Configuration Server]

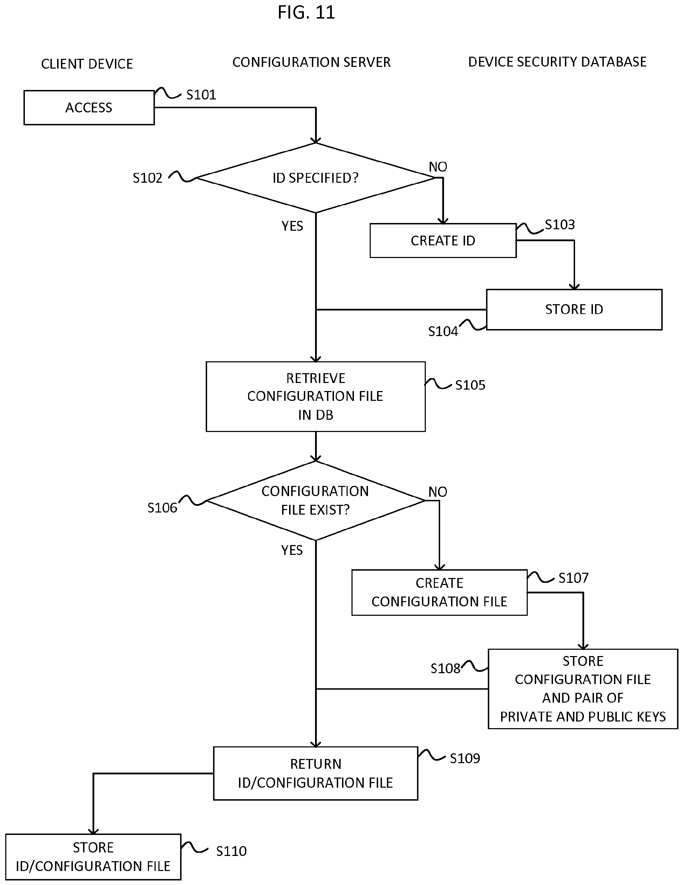

FIG. 11 shows a flowchart of the configuration file request processing according to one or more embodiments.

When the client device 100 accesses the configuration server 300 to download the configuration file (S101), the configuration server 300 executes the Basic authentication of the client device 100. If the certification is acquired based on the input information, the client device 100 executes the configuration file request processing. If the certification is not acquired, the communication between the client device 100 and the configuration server 300 is disconnected.

After the certification is acquired, the processor 310 of the configuration server 300 determines whether the device ID exists (SI02). If the processor 310 determines that the device ID does not exist (S102; No), the device ID is created (S103) and stored in the device security database 200 (S104). If the processor 310 determines that the device ID exists (S102; Yes), the processor 310 retrieves the configuration file corresponding to the device ID in the device security database 200 (S105) to determine whether the configuration file exists (S106). If the configuration file does not exist (S106; No), the processor 310 creates the pair of the private and public keys and the configuration file (S107), and stores the pair of the private and public keys and the configuration file, which correspond to the device ID, to the device security database 200 (S108). Then, the processor 310 returns the device ID (if created) and the configuration file to the client device 100 (S109). The client device 100 stores the device ID (if created) and the configuration file in the storage 112 (S110).

The configuration file request can be automatically executed by the kitting tool 500 installed in the client device 100, or can be manually executed by a user or an operator of the client device 100 in the manufacturing factory.

### [Communication between Client Device and Communication Server]

In one or more embodiments, a unique protocol to execute the security token issue request, JSON data transmission, and command transmission is implemented on HTTP in the application layer of OSI layer model.

### (Security Token Issue Request)

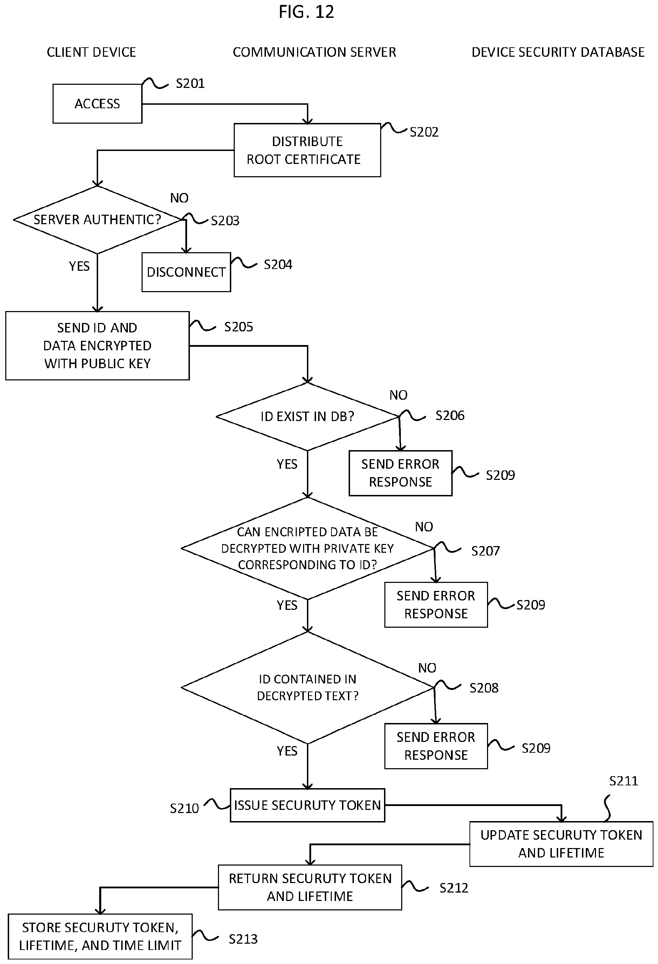

FIG. 12 shows a flowchart of executing the security token issue request according to one or more embodiments.

When the client device 100 accesses the communication server 400 (S201), the processor 410 of the communication server 400 returns the information such as the root certificate and the server ID to the client device 100 (S202). The client device 100 determines whether the communication server 400 is the correct server based on the received information (S203). If the client device 100 determines that the communication server 400 is not the correct server (S203; No), the communication between the client device 100 and the communication server 400 is disconnected (S204). If the client device 100 determines that the communication server 400 is the correct server (S203; Yes), the client device 100 executes the security token issue request.

When the client device 100 sends the HTTP request including the device ID and the binary data (encrypted data) to the communication server 400 (S205), the processor 410 determines: whether the device ID exists in the device security database 200 (S206); whether the binary data can be decrypted with the private key corresponding to the device ID (S207); and whether the decrypted text contains the device ID (S208). If any of the items is not TRUE (S206: No, S207: No, or S208: No), the processor 410 returns HTTP status code "500" to the client devices 100 (S209). If all items in S206-S208 are TRUE (S206: Yes, S207: Yes, and S208: Yes), the processor 410 issues the security token and the lifetime of the security token (S210), and stores the security token, the time when the security token is created, and the lifetime of the security token in the device security database 200 (S211). Then the processor 410 returns the security token and the lifetime of the security token to the client device 100 (S212). The client device 100 calculates the time limit of validity of the security token based on the reference time and the lifetime of the security token, and stores the security token, the lifetime of the security token, and the time limit of validity of the security token (S213).

### (Data transmission)

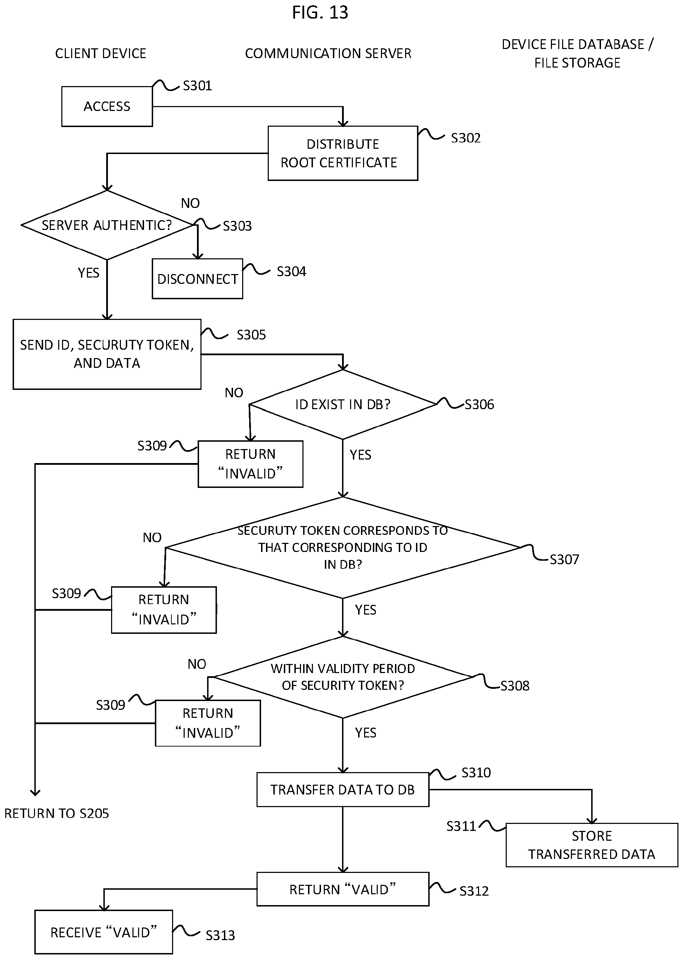

FIG. 13 shows a flowchart of the data transmission processing according to one or more embodiments.

Steps S301-S304 are identical to Steps S201-S204 described above. If the predetermined time has not passed after the security token is issued, Steps S301-S304 can be omitted.

When the client device 100 sends the HTTP request including the device ID, the security token, and the predetermined data to the communication server 400 (S305), the processor 410 of the communication server 400 determines: whether the device ID exists in the device security database 200 (S306); whether the obtained security token coincides with the retrieved security token corresponding to the device ID (S307); and whether an actual time has not passed the time limit of the security token (S308). If any of the items is not TRUE (S306: No, S307: No, or S308: No), the processor 410 returns HTTP status code "450" to the client devices 100 (S309). If all items in S306-S308 are true (S306: Yes, S307: Yes, and S308: Yes), the processor 410 transfers the predetermined data to the device file database 600 (S310), and stores the predetermined data in the device file database 600 (S311). Alternatively, the processor 410 may store the predetermined data in the memory 420. Then the processor 410 returns HTTP status code "200" (S312), and the client device 100 receives HTTP status code "200" (S313).

### (Command transmission)

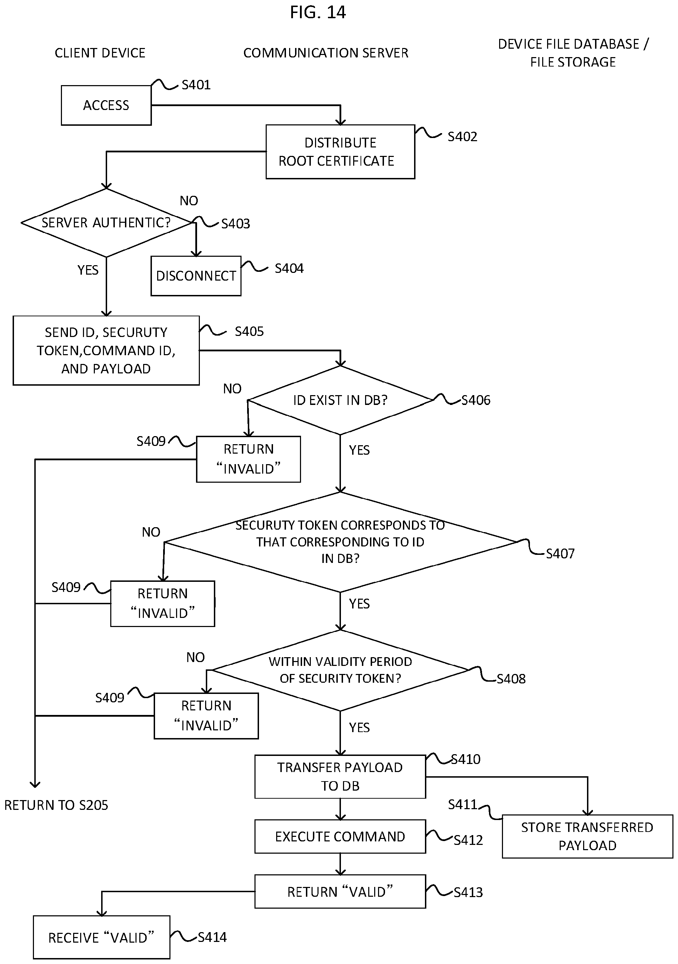

FIG. 14 shows a flowchart of the command transmission processing according to one or more embodiments.

Steps S401-S404 are same as Steps S201-S204 described above. If the predetermined time has not passed after the security token is issued, Steps S401-S404 can be omitted.

When the client device 100 sends the HTTP request including the device ID, the security token, and the command ID (S405), the processor 410 of the communication server 400 determines: whether the device ID exists in the device security database 200 (S406); whether the obtained security token coincides with the retrieved security token corresponding to the device ID (S407); and whether an actual time has not passed the time limit of the security token (S408). If any of the items is not TRUE (S406: No, S407: No, or S408: No), the processor 410 returns HTTP status code "450" to the client devices 100 (S409). If all items in S406-S408 are true (S406: Yes, S407: Yes, and S408: Yes), the processor 410 transfers the payload of the HTTP request to the device file database 600 (S410), and stores the payload in the device file database 600 (S411). Alternatively, the processor 410 stores the payload in the memory 420. Simultaneously, the processor 410 executes the process corresponding to the command ID received from the client device 100 (Step S412). Then the processor 410 returns HTTP status code "200" (S413), and the client device 100 receives HTTP status code "200" (S414).

If the process corresponding to the command ID is to download the file from the file storage 700, the processor 410 retrieves the file from the file storage 700 and transmits the file to the client device 100. In this case, the processor 410 returns HTTP status code "200" and the client device 100 receives HTTP status code "200." If the file does not exist in the file storage 700, the processor 410 returns HTTP status code "404" and the client device 100 receives HTTP status code "404."

As described above, according to one or more embodiments, the client device 100 can securely transmit and receive the data to and from the cloud platform CP via the configuration server 300 and/or the communication server 400 in HTTPS communication network.

According to one or more embodiments, the client device 100 need only access the configuration server 300 to be recognized and managed by the service provided by the cloud platform CP. As the configuration file provided by the configuration server 300 is composed of just the device ID and the public key, the client device 100 can utilize the cloud service even when the client device 100 is a lightweight device. Client devices having sufficient computing performance, sufficient memories, and sufficient storages can also utilize the cloud services according to one or more embodiments. Thus, one or more client devices 100 can be easily deployed to utilize the cloud service.

According to one or more embodiments, when the client device 100 requests the communication server 400 to issue the security token, the communication server 400 determines whether the client device 100 is the correct device by determining whether the binary data can be decrypted with the corresponding private key. Thus, the communication server 400 can easily and accurately confirm the client device 100 managed by the cloud service, and can be prevented from being accessed by the false or unknown device. Also the client device 100 can be prevented from accessed by an in correct server.

After the security token is issued, the communication server 400 can specify the client device 100 based on the device ID and the security token. Thus, the communication server 400 can easily specify the client device 100 managed by the cloud service even when the number of the client devices 100 increases. The communication server 400 can also recognize an operational condition of each of the client devices 100 based on the lifetime and/or the time limit of validity of the security token.

According to one or more embodiments, the client device 100 communicates with the configuration server 300 and the communication server 400 via HTTPS communication network. Moreover, since the unique protocol is implemented on HTTP to execute the communication between the client device 100 and the communication server 400, the information such as the device ID can be transmitted via the secure connection. Thus, the client device 100 can securely transmit and receive the data to and from the device file database 600 and the device security database 200 via the communication server 400.

One or more embodiments can be implemented not only on HTTPS communication network, but on other communication networks where communication paths are not encrypted.

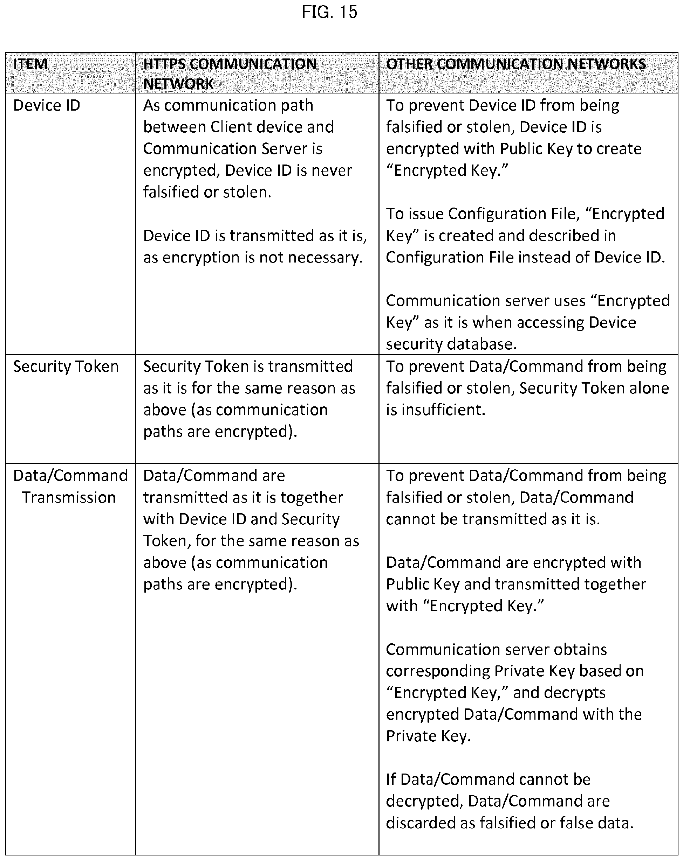

FIG. 15 shows a comparison table between processing executed on HTTPS communication network and processing executed on other communication networks where communication paths are not encrypted.

In one or more embodiments, the device ID, the security token, and the data/command are transmitted without being encrypted as using encrypted connections in HTTPS. On the communication networks where communication paths are not encrypted, the device ID is encrypted with the public key (hereinafter "encrypted key"), in order to prevent the device ID from being falsified or stolen on the network. The encrypted key is described in the configuration file instead of the device ID, and used by the communication server 400 for accessing the device security database 200. On the communication networks where communication paths are not encrypted, the security token alone might be insufficient to prevent the data/command from being falsified or stolen. Thus, the data/command are encrypted with the public key and transmitted together with the encrypted key to the communication server 400. The communication server 400 retrieves the corresponding private key in the device security database 200 using the encrypted key, and decrypts the encrypted data/command with the retrieved private key. If the communication server 400 cannot decrypt the encrypted data/command, the communication server 400 discards the data/command as falsified or false data, and terminates the processing.

The service providing system 1000 according to one or more embodiments can be implemented by providing the protocol on web services and/or databases prepared as a Platform as a Service (PaaS) on typical commercial clouds, without creating a dedicated service. Therefore, the service providing system 1000 can be implemented more advantageously in costs, security measure, and scalability than the case of creating services on ordinary PC servers.

The service providing system 1000 according to one or more embodiments can also be applied to systems using connected cars that is continuously connected to the Internet, and/or remote monitoring systems using power saving wireless sensors. The service providing system 1000 according to one or more embodiments can also be used for managing plant components and/or monitoring resources.

Although the disclosure has been described with respect to only a limited number of embodiments, those skilled in the art, having benefit of this disclosure, will appreciate that various other embodiments may be devised without departing from the scope of protection defined by the attached claims.

## Claims

1. A service providing system comprising:
a cloud platform (CP) that comprises:
a security database (200) that stores a device ID and a pair of a public key and a private key corresponding to the device ID; and
a communication server (400) that communicates with the security database (200),
wherein the communication server:
communicates with a client device (100);
receives a request from the client device (100) to issue a security token, the request including a device ID of the client device and data encrypted with a public key;
determines whether the encrypted data is decrypted with the private key corresponding to the client device by referring to the security database (200); and
in response to the encrypted data being decrypted with the private key, issues and transmits the security token to the client device (100).

2. The service providing system according to claim 1, wherein the communication server (400) retrieves the private key corresponding to the client device (100), in the security database, by using the device ID of the client device as a key.

3. The service providing system according to claim 1 or 2, wherein the communication server (400) further:
determines whether the decrypted data includes the device ID of the client device (100); and
if the decrypted data includes the device ID of the client device, issues and transmits the security token to the client device.

4. The service providing system according to any of claims 1 to 3, wherein the communication server (400) issues and transmits a lifetime of the security token to the client device together with the security token.

5. The service providing system according to claim 4, wherein the communication server (400) stores or updates the security token and the lifetime of the security token in the security database (200) whenever the security token and the lifetime of the security token are issued.

6. The service providing system according to any of claims 1 to 5, wherein:
the cloud platform (CP) further comprises a cloud configuration server (300) that communicates with the security database (200) and the client device (100),
the security database (200) stores a configuration file composed of the device ID and the public key corresponding to the device ID, and
the cloud configuration server (300) obtains the configuration file corresponding to the client device from the security database (200) and transmits the configuration file to the client device in response to a request from the client device (100).

7. The service providing system according to claim 6, wherein:
when the configuration file corresponding to the client device (100) does not exist in the security database (200), the cloud configuration server (300) creates the pair of the public key and the private key corresponding to the client device and the configuration file, composed of the device ID of the client device and the created public key, and transmits the created configuration file to the client device.

8. The service providing system according to claim 7, wherein:
the cloud configuration server (300) stores or updates the pair of the public key and the private key, and the configuration file in the security database (200) whenever the pair of the public key and the private key and the configuration file are created.

9. The service providing system according to any of claims 1 to 8, wherein:
the communication server (400) and/or the cloud configuration server (300) communicate(s) with the client device via HTTPS communication network.

10. A method for providing cloud service using a service providing system that comprises a cloud platform (CP) comprising: a security database (200) that stores a device ID and a pair of a public key and a private key corresponding to the device ID; and a communication server (400) that communicates with the security database, the method comprising:
receiving, by the communication server (400), a request to issue a security token from a client device (100), the request including a device ID of the client device and data encrypted with a public key;
determining, by the communication server (400), whether the encrypted data is decrypted with the private key corresponding to the client device by referring to the security database (200); and
in response to the encrypted data being decrypted with the private key, issuing and transmitting, by the communication server (400), the security token to the client device.

11. The method according to claim 10, wherein
the determining comprises retrieving the private key corresponding to the client device, in the security database (200), by using the device ID of the client device as a key.

12. The method according to claim 10 or 11, wherein:
the determining comprises determining whether the decrypted data includes the device ID of the client device (100); and
if the decrypted data includes the device ID of the client device, executing, by the communication server (400), the issuing and transmitting.

13. The method according to any of claims 10 to 12, wherein the issuing and transmitting comprises issuing and transmitting a lifetime of the security token to the client device together with the security token.

14. The method according to claim 13, further comprising storing or updating, by the communication server (400), the security token and the lifetime of the security token in the security database (200) whenever the security token and the lifetime of the security token are issued.

15. The method according to any of claims 10 to 14, wherein
the cloud platform (CP) further comprises a cloud configuration server (300) that communicates with the security database (200) and the client device (100),
the security database (200) further stores a configuration file composed of the device ID and the public key corresponding to the device ID, and
the method further comprises:
obtaining, by the cloud configuration server (300), the configuration file corresponding to the client device from the security database (200) and transmitting the configuration file to the client device in response to a request from the client device (100).

16. The method according to claim 15, further comprising:
when the configuration file corresponding to the client device (100) does not exist in the security database (200), creating, by the cloud configuration server (300), the pair of the public key and the private key corresponding to the client device and the configuration file composed of the device ID of the client device and the created public key, and transmitting the created configuration file to the client device.

17. The method according to claim 16, further comprising:
storing or updating, by the cloud configuration server (300), the pair of the public key and the private key and the configuration file in the security database (200) whenever the pair of the public key and the private key and the configuration file are created.

18. The method according to any of claims 10 to 17, wherein the communication server (400) and/or the cloud configuration server (300) communicate(s) with the client device via HTTPS communication network.

## Patentansprüche

1. Dienstbereitstellungssystem, das aufweist:
eine Cloud-Plattform (CP), die aufweist:
eine Sicherheitsdatenbank (200), die eine Geräte-ID und ein Paar aus einem öffentlichen Schlüssel und einem privaten Schlüssel speichert, das der Geräte-ID entspricht; und
einen Kommunikationsserver (400), der mit der Sicherheitsdatenbank (200) kommuniziert,
wobei der Kommunikationsserver:
mit einem Client-Gerät (100) kommuniziert;
eine Anfrage von dem Client-Gerät (100) empfängt, um ein Sicherheitstoken auszugeben, wobei die Anfrage eine Geräte-ID des Client-Geräts und mit einem öffentlichen Schlüssel verschlüsselte Daten enthält;
bestimmt, ob die verschlüsselten Daten mit dem privaten Schlüssel entschlüsselt werden, der dem Client-Gerät entspricht, indem auf die Sicherheitsdatenbank (200) Bezug genommen wird; und
als Reaktion auf die Entschlüsselung der verschlüsselten Daten mit dem privaten Schlüssel das Sicherheitstoken ausgibt und an das Client-Gerät (100) übermittelt.

2. Dienstbereitstellungssystem nach Anspruch 1, wobei der Kommunikationsserver (400) den privaten Schlüssel, der dem Client-Gerät (100) entspricht, in der Sicherheitsdatenbank unter Verwendung der Geräte-ID des Client-Geräts als einen Schlüssel abruft.

3. Dienstbereitstellungssystem nach Anspruch 1 oder 2, wobei der Kommunikationsserver (400) ferner:
bestimmt, ob die entschlüsselten Daten die Geräte-ID des Client-Geräts (100) enthalten; und
wenn die entschlüsselten Daten die Geräte-ID des Client-Geräts enthalten, das Sicherheitstoken ausgibt und an das Client-Gerät übermittelt.

4. Dienstbereitstellungssystem nach einem der Ansprüche 1 bis 3, wobei der Kommunikationsserver (400) eine Lebensdauer des Sicherheitstokens ausgibt und zusammen mit dem Sicherheitstoken an das Client-Gerät übermittelt.

5. Dienstbereitstellungssystem nach Anspruch 4, wobei der Kommunikationsserver (400) das Sicherheitstoken und die Lebensdauer des Sicherheitstokens in der Sicherheitsdatenbank (200) speichert und aktualisiert, immer wenn das Sicherheitstoken und die Lebensdauer des Sicherheitstokens ausgegeben werden.

6. Dienstbereitstellungssystem nach einem der Ansprüche 1 bis 5, wobei:
die Cloud-Plattform (CP) ferner einen Cloud-Konfigurationsserver (300) aufweist, der mit der Sicherheitsdatenbank (200) und dem Client-Gerät (100) kommuniziert,
die Sicherheitsdatenbank (200) eine Konfigurationsdatei speichert, die aus der Geräte-ID und dem öffentlichen Schlüssel besteht, welcher der Geräte-ID entspricht, und
der Cloud-Konfigurationsserver (300) die Konfigurationsdatei, die dem Client-Gerät entspricht, von der Sicherheitsdatenbank (200) erhält und die Konfigurationsdatei als Reaktion auf eine Anfrage des Client-Geräts (100) an das Client-Gerät übermittelt.

7. Dienstbereitstellungssystem nach Anspruch 6, wobei:
wenn die Konfigurationsdatei, die dem Client-Gerät (100) entspricht, nicht in der Sicherheitsdatenbank (200) existiert, der Cloud-Konfigurationsserver (300) das Paar aus dem öffentlichen Schlüssel und dem privaten Schlüssel, das dem Client-Gerät entspricht, sowie die Konfigurationsdatei erzeugt, die aus der Geräte-ID des Client-Geräts und dem erzeugten öffentlichen Schlüssel besteht, und die erzeugte Konfigurationsdatei an das Client-Gerät übermittelt.

8. Dienstbereitstellungssystem nach Anspruch 7, wobei:
der Cloud-Konfigurationsserver (300) das Paar aus dem öffentlichen Schlüssel und dem privaten Schlüssel und die Konfigurationsdatei in der Sicherheitsdatenbank (200) speichert oder aktualisiert, immer wenn das Paar aus dem öffentlichen Schlüssel und dem privaten Schlüssel und die Konfigurationsdatei erzeugt werden.

9. Dienstbereitstellungssystem nach einem der Ansprüche 1 bis 8, wobei:
der Kommunikationsserver (400) und/oder der Cloud-Konfigurationsserver (300) über ein HTTPS-Kommunikationsnetzwerk mit dem Client-Gerät kommuniziert/kommunizieren.

10. Verfahren zur Bereitstellung eines Cloud-Service unter Verwendung eines Dienstbereitstellungssystems, das eine Cloud-Plattform (CP) aufweist, die aufweist: eine Sicherheitsdatenbank (200), die eine Geräte-ID und ein Paar aus einem öffentlichen Schlüssel und einem privaten Schlüssel speichert, das der Geräte-ID entspricht; und einen Kommunikationsserver (400), der mit der Sicherheitsdatenbank kommuniziert, wobei das Verfahren umfasst:
Empfangen einer Anfrage zum Ausgeben eines Sicherheitstokens von einem Client-Gerät (100) mittels des Kommunikationsservers (400), wobei die Anfrage eine Geräte-ID des Client-Geräts und mit einem öffentlichen Schlüssel verschlüsselte Daten enthält;
Bestimmen, mittels des Kommunikationsservers (400), ob die verschlüsselten Daten mit dem privaten Schlüssel entschlüsselt werden, der dem Client-Gerät entspricht, indem auf die Sicherheitsdatenbank (200) Bezug genommen wird; und
als Reaktion auf die Entschlüsselung der verschlüsselten Daten mit dem privaten Schlüssel, Ausgeben und Übermitteln des Sicherheitstokens an das Client-Gerät mittels des Kommunikationsservers (400).

11. Verfahren nach Anspruch 10, wobei
das Bestimmen das Abrufen des privaten Schlüssels, der dem Client-Gerät entspricht, in der Sicherheitsdatenbank (200) unter Verwendung der Geräte-ID des Client-Geräts als einen Schlüssel umfasst.

12. Verfahren nach Anspruch 10 oder 11, wobei:
das Bestimmen das Bestimmen umfasst, ob die entschlüsselten Daten die Geräte-ID des Client-Geräts (100) enthalten; und
wenn die entschlüsselten Daten die Geräte-ID des Client-Geräts enthalten, Ausführen des Ausgebens und Übermittelns mittels des Kommunikationsservers (400).

13. Verfahren nach einem der Ansprüche 10 bis 12, wobei das Ausgeben und Übermitteln das Ausgeben und Übermitteln einer Lebensdauer des Sicherheitstokens an das Client-Gerät zusammen mit dem Sicherheitstoken umfasst.

14. Verfahren nach Anspruch 13, ferner umfassend das Speichern und Aktualisieren des Sicherheitstokens und der Lebensdauer des Sicherheitstokens in der Sicherheitsdatenbank (200) mittels des Kommunikationsservers (400), immer wenn das Sicherheitstoken und die Lebensdauer des Sicherheitstokens ausgegeben werden.

15. Verfahren nach einem der Ansprüche 10 bis 14, wobei
die Cloud-Plattform (CP) ferner einen Cloud-Konfigurationsserver (300) aufweist, der mit der Sicherheitsdatenbank (200) und dem Client-Gerät (100) kommuniziert,
die Sicherheitsdatenbank (200) ferner eine Konfigurationsdatei speichert, die aus der Geräte-ID und dem öffentlichen Schlüssel besteht, welcher der Geräte-ID entspricht, und
das Verfahren ferner umfasst:
Erhalten, mittels des Cloud-Konfigurationsservers (300), der Konfigurationsdatei, die dem Client-Gerät entspricht, von der Sicherheitsdatenbank (200) und Übermitteln der Konfigurationsdatei als Reaktion auf eine Anfrage des Client-Geräts (100) an das Client-Gerät.

16. Verfahren nach Anspruch 15, ferner umfassend:
wenn die Konfigurationsdatei, die dem Client-Gerät (100) entspricht, nicht in der Sicherheitsdatenbank (200) existiert, Erzeugen, mittels des Cloud-Konfigurationsservers (300), des Paares aus dem öffentlichen Schlüssel und dem privaten Schlüssel, das dem Client-Gerät entspricht, und der Konfigurationsdatei, die aus der Geräte-ID des Client-Geräts und dem erzeugten öffentlichen Schlüssel besteht, und Übermitteln der erzeugten Konfigurationsdatei an das Client-Gerät.

17. Verfahren nach Anspruch 16, ferner umfassend:
Speichern oder Aktualisieren des Paares aus dem öffentlichen Schlüssel und dem privaten Schlüssel und der Konfigurationsdatei in der Sicherheitsdatenbank (200) mittels des Cloud-Konfigurationsservers (300), immer wenn das Paar aus dem öffentlichen Schlüssel und dem privaten Schlüssel und die Konfigurationsdatei erzeugt werden.

18. Verfahren nach einem der Ansprüche 10 bis 17, wobei der Kommunikationsserver (400) und/oder der Cloud-Konfigurationsserver (300) über ein HTTPS-Kommunikationsnetzwerk mit dem Client-Gerät kommuniziert/kommunizieren.

## Revendications

1. Système de fourniture de services comprenant :
une plateforme en nuage (CP) qui comprend :
une base de données de sécurité (200) qui stocke un ID de dispositif et une paire de clés publique et privée correspondant à l'ID de dispositif ; et
un serveur de communication (400) qui communique avec la base de données de sécurité (200), dans lequel le serveur de communication :
communique avec un dispositif client (100) ;
reçoit une demande du dispositif client (100) pour émettre un jeton de sécurité, la demande comprenant un ID de dispositif du dispositif client et des données cryptées avec une clé publique ;
détermine si les données cryptées sont décryptées avec la clé privée correspondant au dispositif client en se référant à la base de données de sécurité (200) ; et
en réponse aux données cryptées étant décryptées avec la clé privée, émet et transmet le jeton de sécurité au dispositif client (100).

2. Système de fourniture de services selon la revendication 1, dans lequel le serveur de communication (400) récupère la clé privée correspondant au dispositif client (100), dans la base de données de sécurité, en utilisant l'ID de dispositif du dispositif client en tant que clé.

3. Système de fourniture de services selon la revendication 1 ou 2, dans lequel le serveur de communication (400) :
détermine en outre si les données décryptées incluent l'ID de dispositif du dispositif client (100) ; et si les données décryptées incluent l'ID de dispositif du dispositif client, émet et transmet le jeton de sécurité au dispositif client.

4. Système de fourniture de services selon l'une quelconque des revendications 1 à 3, dans lequel le serveur de communication (400) émet et transmet une durée de vie du jeton de sécurité au dispositif client avec le jeton de sécurité.

5. Système de fourniture de services selon la revendication 4, dans lequel le serveur de communication (400) stocke ou met à jour le jeton de sécurité et la durée de vie du jeton de sécurité dans la base de données de sécurité (200) chaque fois que le jeton de sécurité et la durée de vie du jeton de sécurité sont émis.

6. Système de fourniture de services selon l'une quelconque des revendications 1 à 5, dans lequel :
la plate-forme en nuage (CP) comprend en outre un serveur de configuration en nuage (300) qui communique avec la base de données de sécurité (200) et le dispositif client (100),
la base de données de sécurité (200) stocke un fichier de configuration composé de l'ID de dispositif et de la clé publique correspondant à l'ID de dispositif, et
le serveur de configuration en nuage (300) obtient le fichier de configuration correspondant au dispositif client à partir de la base de données de sécurité (200) et transmet le fichier de configuration au dispositif client en réponse à une demande provenant du dispositif client (100).

7. Système de fourniture de services selon la revendication 6, dans lequel :
lorsque le fichier de configuration correspondant au dispositif client (100) n'existe pas dans la base de données de sécurité (200), le serveur de configuration en nuage (300) crée la paire de clés publique et privée correspondant au dispositif client et au fichier de configuration, composée de l'ID de dispositif du dispositif client et de la clé publique créée, et transmet le fichier de configuration créé au dispositif client.

8. Système de fourniture de services selon la revendication 7, dans lequel :
le serveur de configuration en nuage (300) stocke ou met à jour la paire de clés publique et privée, ainsi que le fichier de configuration dans la base de données de sécurité (200) chaque fois que la paire de clés publique et privée et le fichier de configuration sont créés.

9. Système de fourniture de services selon l'une quelconque des revendications 1 à 8, dans lequel :
le serveur de communication (400) et/ou le serveur de configuration en nuage (300) communique(nt) avec le dispositif client par un réseau de communication HTTPS.

10. Procédé pour fournir un service en nuage en utilisant un système de fourniture de services qui comprend une plate-forme en nuage (CP) comprenant : une base de données de sécurité (200) qui stocke un ID de dispositif et une paire de clés publique et privée correspondant à l'ID de dispositif ; et un serveur de communication (400) qui communique avec la base de données de sécurité, le procédé comprenant :
la réception, par le serveur de communication (400), d'une demande d'émission d'un jeton de sécurité provenant d'un dispositif client (100), la demande comprenant un ID de dispositif du dispositif client et des données cryptées avec une clé publique ;
la détermination, par le serveur de communication (400), du fait que les données cryptées soient décryptées ou non avec la clé privée correspondant au dispositif client en se référant à la base de données de sécurité (200) ; et
en réponse aux données cryptées étant décryptées avec la clé privée, l'émission et la transmission, par le serveur de communication (400), du jeton de sécurité au dispositif client.

11. Procédé selon la revendication 10, dans lequel :
la détermination comprend la récupération de la clé privée correspondant au dispositif client, dans la base de données de sécurité (200), en utilisant l'ID de dispositif du dispositif client en tant que clé.

12. Procédé selon la revendication 10 ou 11, dans lequel :
la détermination comprend le fait de déterminer si les données décryptées incluent l'ID de dispositif du dispositif client (100) ; et
si les données décryptées incluent l'ID de dispositif du dispositif client, l'exécution, par le serveur de communication (400), de l'émission et de la transmission.

13. Procédé selon l'une quelconque des revendications 10 à 12, dans lequel l'émission et la transmission comprennent l'émission et la transmission d'une durée de vie du jeton de sécurité au dispositif client avec le jeton de sécurité.

14. Procédé selon la revendication 13, comprenant en outre le stockage ou la mise à jour, par le serveur de communication (400), du jeton de sécurité et de la durée de vie du jeton de sécurité dans la base de données de sécurité (200), chaque fois que le jeton de sécurité et la durée de vie du jeton de sécurité sont émis.

15. Procédé selon l'une quelconque des revendications 10 à 14, dans lequel :
la plate-forme en nuage (CP) comprend en outre un serveur de configuration en nuage (300) qui communique avec la base de données de sécurité (200) et le dispositif client (100),
la base de données de sécurité (200) stocke en outre un fichier de configuration composé de l'ID de dispositif et de la clé publique correspondant à l'ID de dispositif, et
le procédé comprend en outre:
l'obtention, par le serveur de configuration en nuage (300), du fichier de configuration correspondant au dispositif client à partir de la base de données de sécurité (200) et la transmission du fichier de configuration au dispositif client, en réponse à une demande provenant du dispositif client (100).

16. Procédé selon la revendication 15, comprenant en outre :
lorsque le fichier de configuration correspondant au dispositif client (100) n'existe pas dans la base de données de sécurité (200), la création, par le serveur de configuration en nuage (300), de la paire de clés publique et privée correspondant au dispositif client et au fichier de configuration composé de l'ID de dispositif du dispositif client et de la clé publique créée, et la transmission du fichier de configuration créé au dispositif client.

17. Procédé selon la revendication 16, comprenant en outre :
le stockage ou la mise à jour, par le serveur de configuration en nuage (300), de la paire de clés publique et privée et du fichier de configuration dans la base de données de sécurité (200), chaque fois que la paire de clés publique et privée et le fichier de configuration sont créés.

18. Procédé selon l'une quelconque des revendications 10 à 17, dans lequel le serveur de communication (400) et/ou le serveur de configuration en nuage (300) communique(nt) avec le dispositif client par un réseau de communication HTTPS.
